# EUROPEAN PATENT APPLICATION

(11) **EP 4 741 328 A1**
(43) Date of publication of application: **13.05.2026**
(21) Application number: 25213002.6
(22) Date of filing: 03.11.2025
(51) Int. Cl.: B65H 3/52

(54) **SHEET CONVEYING APPARATUS**

(30) Priority: 11.11.2024 JP 2024196629
(71) Applicant: KYOCERA Document Solutions Inc., Osaka-shi, Osaka 540-8585 (JP)
(72) Inventor: ISODA, Ren, Osaka-shi, 540-8585 (JP)
(74) Representative: Kurig, Thomas

(57) **Abstract**

A sheet conveying apparatus includes a feed roller (46), a separation pad (48), a separation pad holder (50), a conveying guide member (39A), a separation roller (47), a first vibration damping member (61), and a second vibration damping member (62). The conveying guide member (39A) guides a conveyance of the sheet (G) and supports the separation pad holder (50). The separation roller (47) holds the sheet (G) fed by the feed roller (46) between itself and the separation pad (48) and conveys the sheet (G) in the conveying direction (Z). The first vibration damping member (61) is provided between the separation pad (48) and the separation pad holder (50). The second vibration damping member (62) is provided between the separation pad holder (50) and the conveying guide member (39A).

## Description

### BACKGROUND

The present disclosure relates to a sheet conveying apparatus.

A document conveying apparatus for conveying a document along a conveying path passing through a reading position of a document reading apparatus is known. The document conveying apparatus includes a tray on which the document is placed and a feed roller which feeds the document from the tray. The feed roller comes into contact with the document placed on the tray, when the feed roller is worn or the documents are stuck to each other due to static electricity, a double feeding occurs in which two or more documents are fed in an overlapped state. Therefore, a technique for separating the double fed documents has been studied. For example, in the document conveying apparatus disclosed in JP2002265081, a separation roller and a separation pad are provided on the downstream side of the feed roller in the feed direction. By holding the document between the separation roller and the separation pad and conveying the document, the double fed documents are separated.

### SUMMARY

A sheet conveying apparatus according to the present disclosure includes a feed roller, a separation pad, a separation pad holder, a conveying guide member, a separation roller, a first vibration damping member, and a second vibration damping member. The feed roller feeds a sheet from a sheet feeding tray in a predetermined conveying direction. The separation pad is provided on a downstream side of the feed roller in the conveying direction. The separation pad holder holds the separation pad. The conveying guide member guides a conveyance of the sheet and supports the separation pad holder. The separation roller holds the sheet fed by the feed roller between itself and the separation pad and conveys the sheet in the conveying direction. The first vibration damping member is provided between the separation pad and the separation pad holder. The second vibration damping member is provided between the separation pad holder and the conveying guide member.

### BRIEF DESCRIPTION OF THE DRAWINGS

FIG. 1 is a perspective view showing an appearance of an image forming system according to one embodiment of the present disclosure.
FIG. 2 is a front view schematically showing a configuration of a document conveying apparatus and a document reading apparatus according to the embodiment of the present disclosure.
FIG. 3 is a right side view schematically showing a configuration of a printing apparatus according to the embodiment of the present disclosure.
FIG. 4 is a cross-sectional view showing the configuration of the document conveying apparatus according to the embodiment of the present disclosure.
FIG. 5 is a cross-sectional view showing a feed part and a separation pad according to the embodiment of the present disclosure.
FIG. 6 is a cross-sectional view showing the feed part and the separation pad according to the embodiment of the present disclosure.
FIG. 7 is a cross-sectional view showing the feed part and the separation pad according to the embodiment of the present disclosure.
FIG. 8 is a perspective view showing a cross section of a conveying guide member and the separation pad according to the embodiment of the present disclosure.
FIG. 9 is a perspective view showing a cross section of the conveying guide member and the separation pad according to the embodiment of the present disclosure.
FIG. 10 is a perspective view showing the feed part according to the embodiment of the present disclosure.
FIG. 11 is a perspective view showing a separation pad holder according to the embodiment of the present disclosure.
FIG. 12 is a perspective view showing the separation pad holder according to the embodiment of the present disclosure.
FIG. 13 is a front view showing the separation pad holder according to the embodiment of the present disclosure.
FIG. 14 is a perspective view showing the separation pad according to the embodiment of the present disclosure.
FIG. 15 is a perspective view showing the separation pad according to the embodiment of the present disclosure.
FIG. 16 is a perspective view showing the separation pad according to the embodiment of the present disclosure.
FIG. 17 is a front view showing a state in which the separation pad holder is flipped up, in the embodiment of the present disclosure.
FIG. 18 is a front view showing a state in which the separation pad holder is removed from a hinge shaft, in the embodiment of the present disclosure.

### DETAILED DESCRIPTION

Hereinafter, with reference to the drawings, an image forming system 100 according to an embodiment of the present disclosure will be described.

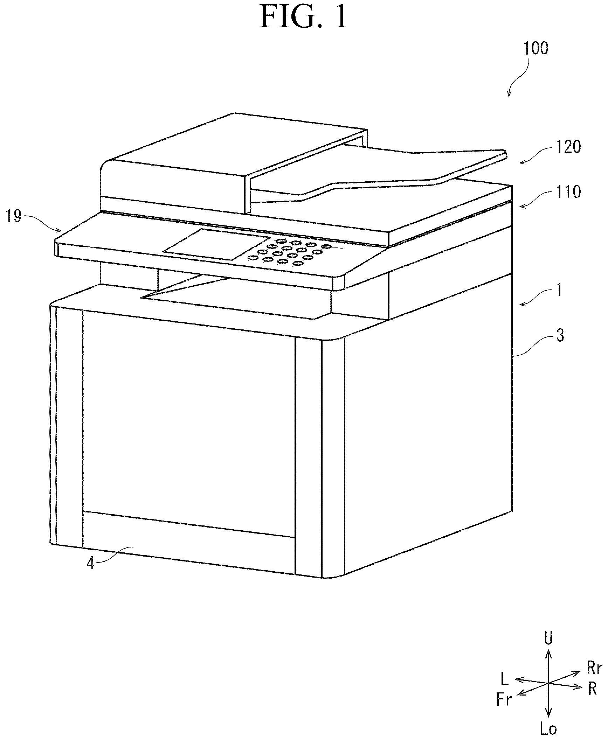

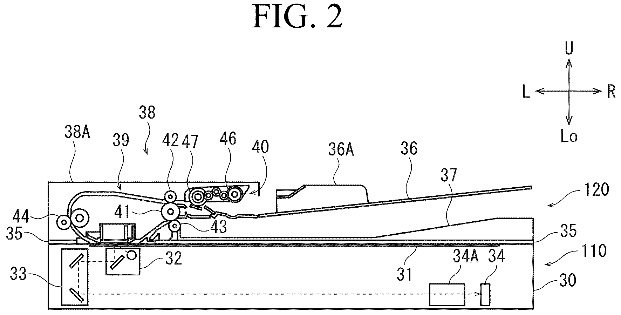

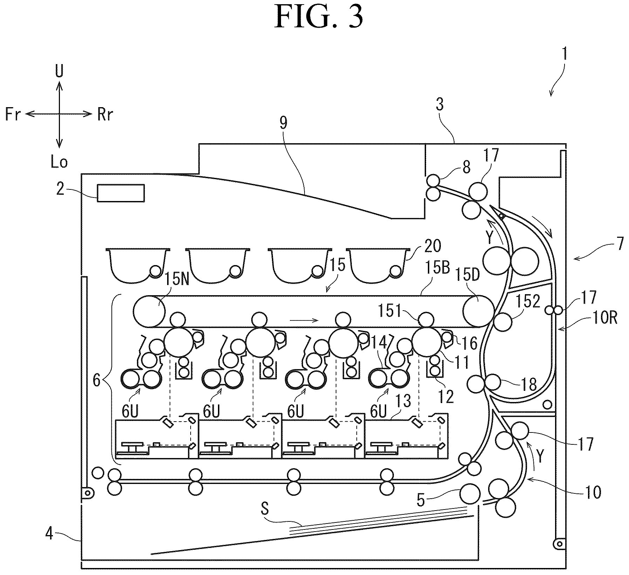

FIG. 1 is a perspective view showing an appearance of the image forming system 100. FIG. 2 is a front view schematically showing a configuration of a document conveying apparatus 120 and a document reading apparatus 110. FIG. 3 is a right side view schematically showing a configuration of a printing apparatus 1. In each figure, U, Lo, L, R, Fr, and Rr indicate the upper, lower, left, right, front, and rear, respectively. These directions are determined only for convenience of explanation.

The image forming system 100 (see FIG. 1) includes the printing apparatus 1, the document reading apparatus 110, and the document conveying apparatus 120. The document reading apparatus 110 is provided above the printing apparatus 1, and the document conveying apparatus 120 is provided above the document reading apparatus 110. The document conveying apparatus 120 conveys a document via a reading position of the document reading apparatus 110. The document reading apparatus 110 is a flatbed type image scanner, and reads the document to generate image data. The printing apparatus 1 forms an image based on the image data on a sheet S. The document conveying apparatus 120 is an example of the sheet conveying apparatus according to the present disclosure. The document is an example of the sheet conveyed by the sheet conveying apparatus.

[Printing Apparatus] The printing apparatus 1 (see FIG. 3) includes a rectangular parallelepiped main body housing 3. A sheet feeding cassette 4 in which the sheet S is housed and a sheet feed roller 5 which feeds the sheet S rearward from the sheet feeding cassette 4 are provided in the lower portion of the main body housing 3. Above the sheet feeding cassette 4, an image forming device 6 which forms a toner image in an electrophotographic manner is provided, and a fixing device 7 which fixes the toner image to the sheet S is provided on the rear and upper side of the image forming device 6. Above the fixing device 7, a discharge roller 8 which discharges the sheet S on which the toner image is fixed and a discharge tray 9 on which the discharged sheet S is loaded are provided.

Inside the main body housing 3, a conveying path 10 extending from the sheet feed roller 5 through the image forming device 6 and the fixing device 7 to the discharge roller 8 is provided. The conveying path 10 is formed mainly of plate-like members facing each other with a gap for passing the sheet S, and a conveying roller 17 for holding and conveying the sheet S is provided at a plurality of positions in the conveying direction Y. A registration roller 18 is provided on the upstream side of the image forming device 6 in the conveying direction Y. An inversion conveying path 10R is provided on the right side of the fixing device 7. The inversion conveying path 10R branches from the conveying path 10 at a branch point located on the downstream side of the fixing device 7 in the conveying direction Y and merges with the conveying path 10 at a merging point located on the upstream side of the registration roller 18 in the conveying direction Y.

The image forming device 6 includes four sets of image forming units 6U and an intermediate transfer unit 15. The image forming unit 6U includes a photosensitive drum 11 whose potential changes by irradiation with light, a charging device 12 which charges the photosensitive drum 11, and an exposure device 13 which emits laser light corresponding to the image data. The image forming unit 6U further includes a developing device 14 which supplies toner to the photosensitive drum 11 and a cleaning device 16 which removes the toner remaining on the photosensitive drum 11. The intermediate transfer unit 15 includes an endless intermediate transfer belt 15B wound around a drive roller 15D and a driven roller 15N. The intermediate transfer unit 15 further includes primary transfer rollers 151 which face the inner peripheral surface of the intermediate transfer belt 15B at positions corresponding to the photosensitive drums 11 and generate a primary transfer bias. Further, the intermediate transfer unit 15 includes a secondary transfer roller 152 which faces the outer peripheral surface of the intermediate transfer belt 15B at a position corresponding to the drive roller 15D, and generates a secondary transfer bias. A toner container 20 which supplies the toner to the developing device 14 is connected to the developing device 14. The image forming device 6 forms a color image by superposing the four color toner images on the intermediate transfer belt 15B. The printing apparatus 1 may include two, three, or five or more image forming units 6U.

[Document Reading Apparatus] The document reading apparatus 110 (see FIG. 2) includes a rectangular parallelepiped housing 30, a first carriage 32 including a light source and a reflecting mirror, and a second carriage 33 including two reflecting mirrors. The document reading apparatus 110 further includes a lens 34A which focuses light to form an image, an imaging element 34 which converts the formed image into image data, and a contact glass 31 on which the sheet G is placed. The contact glass 31 is provided on the upper surface of the housing 30.

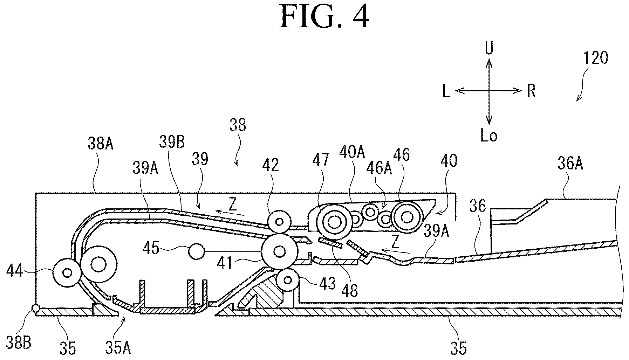

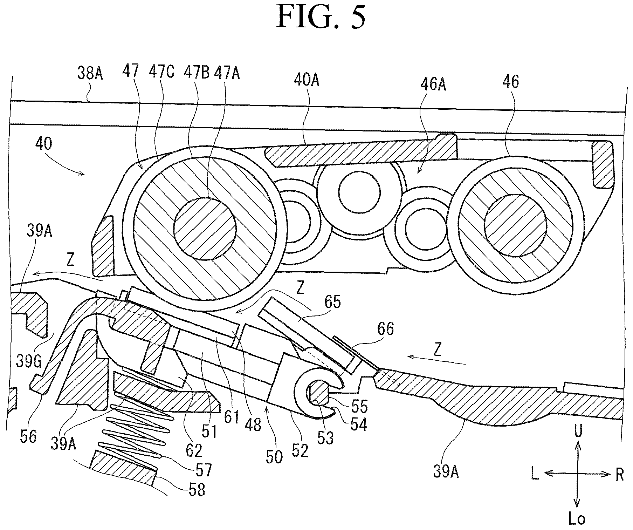

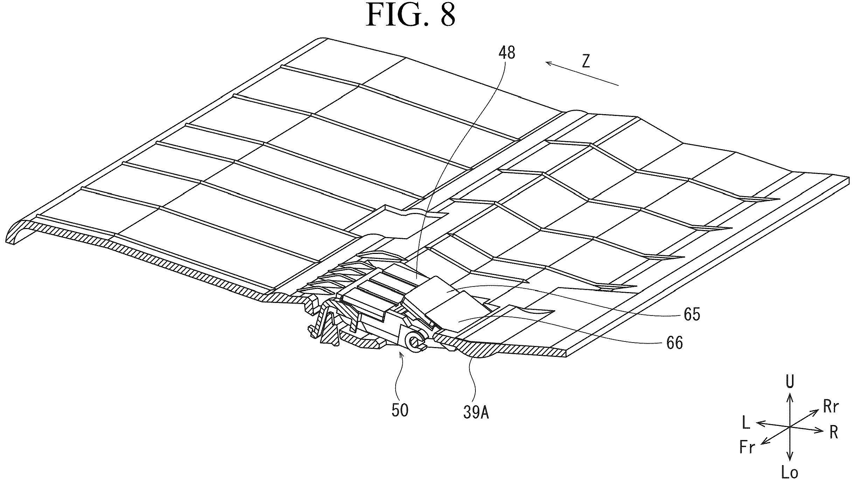

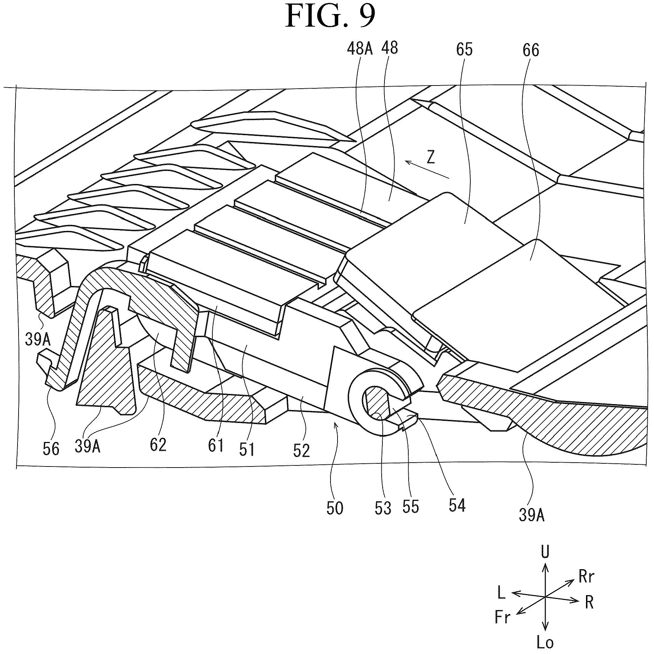

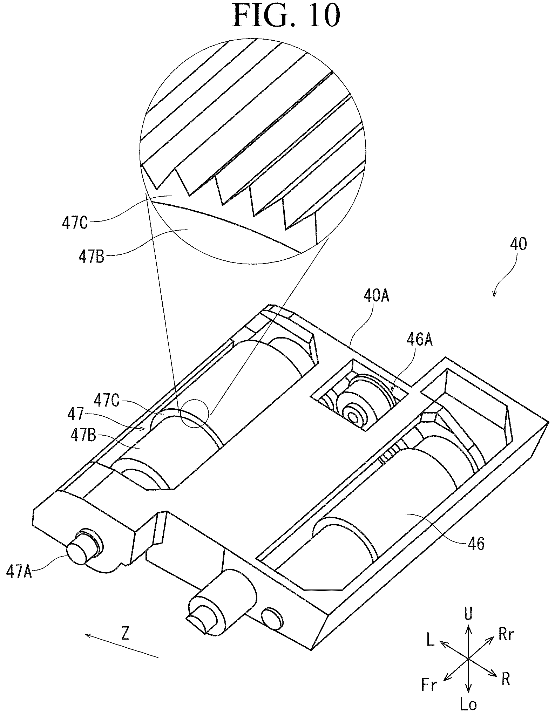

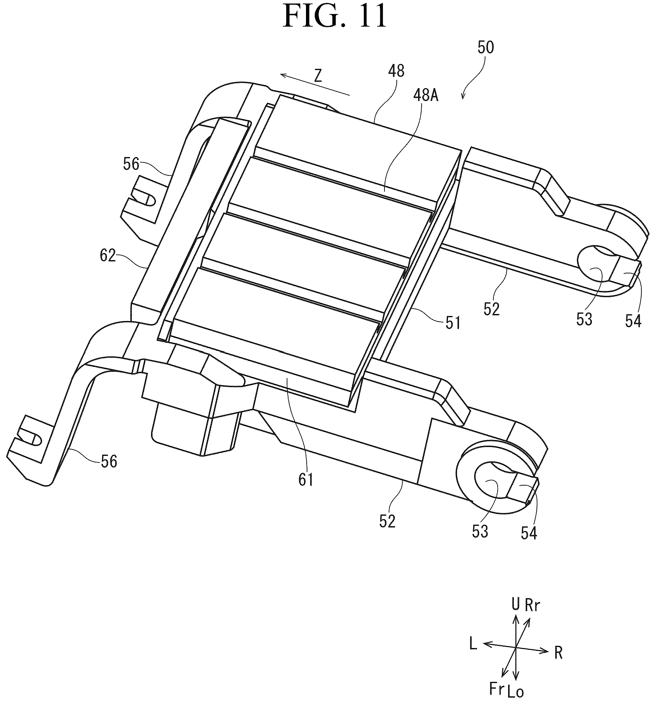

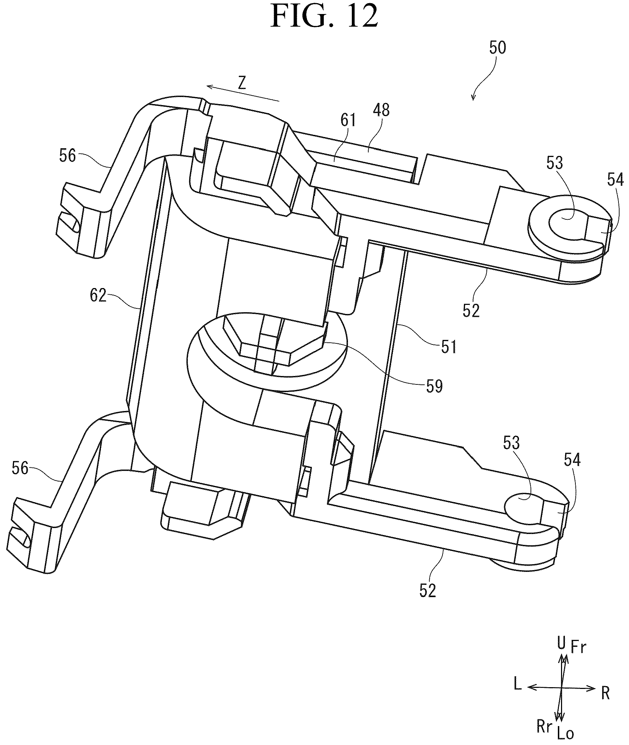

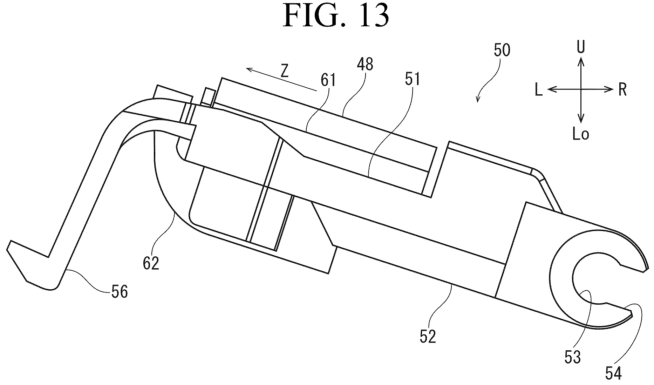

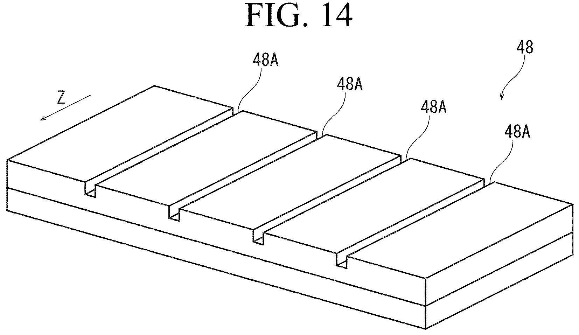

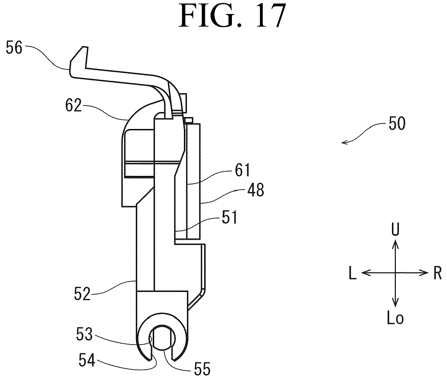

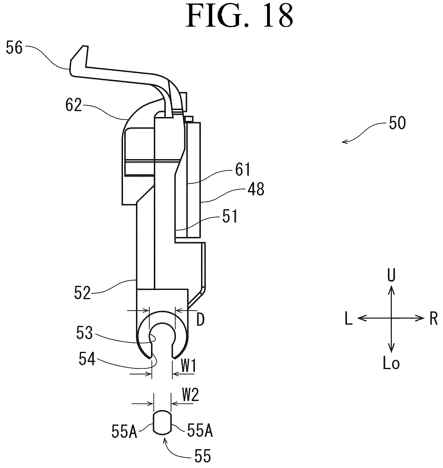

[Document Conveying Apparatus] FIG. 4 is a cross-sectional view showing a configuration of the document conveying apparatus 120. FIG. 5 to FIG. 7 are cross-sectional views showing a feed part 40 and a separation pad 48. FIG. 8 and FIG. 9 are perspective views showing a cross section of a conveying guide member 39A and the separation pad 48. FIG. 10 is a perspective view showing the feed part 40. FIG. 11 and FIG. 12 are perspective views showing a separation pad holder 50. FIG. 13 is a front view showing the separation pad holder 50. FIG. 14 to FIG. 16 are perspective views showing the separation pad 48. FIG. 17 is a front view showing a state in which the separation pad holder 50 is flipped up. FIG. 18 is a front view showing a state in which the separation pad holder 50 is removed from a hinge shaft 55.

The document conveying apparatus 120 (see FIG. 2 and FIG. 4) includes a generally rectangular bottom plate 35 formed in a flat shape. The rear end portion of the bottom plate 35 is coupled to the upper surface of the housing 30 on the rear side of the contact glass 31 via a hinge (not shown), and the bottom plate 35 can be opened and closed around the hinge. The bottom plate 35 has both a function of supporting each part of the document conveying apparatus 120 and a function of pressing the sheet G on the contact glass 31.

The document conveying apparatus 120 includes a sheet feeding tray 36, a conveying part 38, and a discharge tray 37. The sheet feeding tray 36 is provided between the vicinity of the center and the right end portion of the document conveying apparatus 120. The sheet feeding tray 36 is inclined so that the left side is lower, and the sheet feeding tray 36 includes a cursor 36A which aligns the front and rear ends of the sheet G. The discharge tray 37 is provided below the sheet feeding tray 36. The discharge tray 37 is inclined so that the left side is lower.

[Conveying Part] The conveying part 38 includes the feed part 40, a drive roller 41, a supply roller 42, a discharge roller 43, and a conveying path 39. The feed part 40 is arranged on the left and upper side of the left end portion of the sheet feeding tray 36 and near the center of the sheet feeding tray 36 in the front-and-rear direction. The drive roller 41, the supply roller 42, and the discharge roller 43 are arranged with their axial directions along the front-and-rear direction. The drive roller 41 is arranged on the left and lower side of the feed part 40. The supply roller 42 is arranged above the drive roller 41. The discharge roller 43 is arranged below the drive roller 41. The supply roller 42 and the discharge roller 43 are in contact with the drive roller 41. The drive roller 41 is driven by a driving force transmitted from a motor 45 through a gear train (not shown), and the supply roller 42 and the discharge roller 43 follow the drive roller 41.

The bottom plate 35 has an opening 35A. The opening 35A is provided in a region facing the first carriage 32 positioned at the home position, is formed in a rectangular shape elongated in the front-and-rear direction, and penetrates in the upper-and-lower direction. The conveying part 38 is covered with an outer cover 38A. The left lower portion of the outer cover 38A is coupled to the left end portion of the bottom plate 35 through a hinge 38B, and the outer cover 38A can be opened and closed around the hinge 38B. The upper right portion of the outer cover 38A faces the upstream end portion of the conveying guide member 39A in the conveying direction Z.

[Conveying Path] The conveying path 39 extends leftward from the contact area between the supply roller 42 and the drive roller 41, passes above the opening 35A, is curved downward, and reaches the discharge roller 43 via the opening 35A. The conveying path 39 is formed by the plate-shaped conveying guide members 39A and 39B (see FIG. 4). The conveying guide member 39A (see FIG. 8) faces the lower surface of the sheet G fed by the feed part 40. The conveying guide member 39B faces the upper surface of the sheet G fed by the feed part 40. The upstream end portion of the conveying guide member 39A in the conveying direction Z reaches the upstream side of the feed part 40 in the conveying direction Z, and is adjacent to the downstream end portion of the sheet feeding tray 36 in the conveying direction Z. The conveying guide member 39B is provided on the downstream side of the feed part 40 in the conveying direction Z. On the conveying path 39, one or more conveying rollers 44 whose axial directions are along the front-and-rear direction are provided,

[Feed Part] The feed part 40 (see FIG. 5 and FIG. 10) is provided on the inner surface (the lower surface) of the upper right portion of the outer cover 38A, and faces the upstream portion of the conveying guide member 39A in the conveying direction Z. The feed part 40 is arranged near the center of the conveying path 39 in the front-and-rear direction. The feed part 40 includes a feed roller 46 and a separation roller 47 provided on the left side of the feed roller 46. The feed roller 46 is supported by a holder 40A. The holder 40A is supported by the outer cover 38A through the shaft 47A of the separation roller 47 and can be turned upward and downward around the shaft 47A.

The separation roller 47 is driven by a driving force transmitted from the motor 45 through a gear train (not shown). The feed roller 46 is driven by the driving force transmitted from the separation roller 47 through a gear train 46A. The separation roller 47 has a shaft 47A, a first layer 47B provided around the shaft 47A, and a second layer 47C provided around the first layer 47B. The first layer 47B is made of, for example, polyacetal. The second layer 47C is made of, for example, silicone rubber. The outer peripheral surface of the second layer 47C is knurled (see FIG. 10). A shape of the knurl is, for example, a flat knurl.

[Separation Pad] The separation pad 48 (see FIG. 5, FIG. 8 and FIG. 9) is made of material having a relatively high frictional resistance, for example, silicone rubber. A hardness of the separation pad 48 is higher than that of the second layer 47C of the separation roller 47. Therefore, vibration of the separation pad 48 is suppressed, and abnormal noise is hardly generated.

The separation pad 48 is formed in a rectangular plate shape, for example. The separation pad 48 is inclined so that the downstream side in the conveying direction Z is higher than the upstream side. A dimension of the separation pad 48 in the width direction orthogonal to the conveying direction Z is longer than that of the separation roller 47. The surface (in this embodiment, the upper surface) of the separation pad 48 facing the separation roller 47 is flat. One or more grooves 48A are formed on the upper surface of the separation pad 48. The groove 48A is formed straightly along the conveying direction Z. The groove 48A may be inclined with respect to the conveying direction Z, but preferably not in a direction orthogonal to the conveying direction Z. This is because when the groove 48A is orthogonal to the conveying direction Z, the leading end of the sheet G may be caught in the groove 48A.

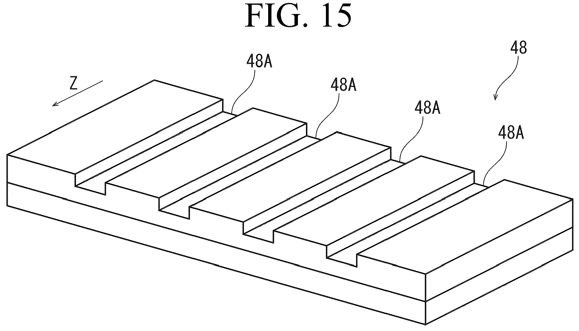

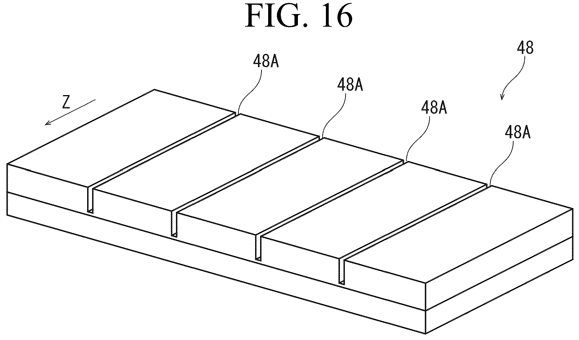

FIG. 14 to FIG. 16 shows variations of the groove 48A. FIG. 14 is an example of the separation pad 48 having the groove 48A corresponding to a standard sheet G. On the other hand, FIG. 15 shows an example in which a width of the groove 48A is widened, and FIG. 16 shows an example in which the groove 48A is deepened and a width of the groove 48A is narrowed. As described above, in the present embodiment, a plurality of kinds of the separation pads 48 having different specifications of the groove 48A are prepared in advance, and the plurality of kinds of separation pads 48 are interchangeable.

[Separation Pad Holder] The separation pad holder 50 (see FIG. 5 and FIG. 11 to FIG. 13) includes a separation pad support part 51, arm parts 52, and engagement parts 56. The separation pad support part 51 supports the separation pad 48 via a first vibration damping member 61 described later. The arm parts 52 protrude from both right and left end portions of the separation pad support part 51 toward the upstream side in the conveying direction Z. At the upstream end portion of the arm part 52 in the conveying direction Z, a hinge hole portion 53 penetrating in the left-and-right direction is provided. The hinge shaft 55 provided in the conveying guide member 39A is inserted into the hinge hole portions 53. The separation pad holder 50 is turnable around the hinge shaft 55.

The hinge shaft 55 has a pair of parallel surfaces 55A along the axial direction (see FIG. 18). The hinge hole portion 53 has an opening 54 penetrating in the conveying direction Z. A width W1 of the opening 54 is smaller than a diameter D of the hinge hole portion 53 and slightly larger than a distance W2 between one and the other of the pair of surfaces 55A. Therefore, by turning the separation pad holder 50 so that the opening 54 is parallel to the surfaces 55A, the separation pad holder 50 can be attached to and detached from the hinge shaft 55.

The engagement parts 56 bent downward are provided at both right and left end portions of the downstream end portion of the separation pad support part 51 in the conveying direction Z. The engagement parts 56 are engaged with a gap 39G (see FIG. 5) provided in the conveying guide member 39A, so that a change in a posture of the separation pad holder 50 is suppressed.

[First Vibration Damping member, Second Vibration Damping Member] The first vibration damping member 61 and a second vibration damping member 62 are made of material for suppressing vibration, for example, urethane. The first vibration damping member 61 is provided between the upper surface of the separation pad support part 51 and the lower surface of the separation pad 48. The second vibration damping member 62 is provided on the lower surface of the separation pad support part 51 and is in contact with the conveying guide member 39A.

[Biasing Member] A biasing member 57 is, for example, a compression coil spring and biases the separation pad 48 toward the separation roller 47. On the lower surface of the separation pad support part 51, a biasing member engagement portion 59 (see FIG. 12) with which the upper end portion of the biasing member 57 is engaged is provided. The conveying guide member 39A is provided with a biasing member support portion 58 which supports the lower end portion of the biasing member 57 (see FIG. 5).

[Pre-separation Pad, Film] A pre-separation pad 65 is provided on the upstream side of the separation pad 48 in the conveying direction Z. The pre-separation pad 65 is inclined so that the downstream side in the conveying direction Z is higher than the upstream side, and an inclination angle thereof is larger than an inclination angle of the separation pad 48. The downstream end portion of the pre-separation pad 65 in the conveying direction Z is positioned higher than the upstream end portion of the separation pad 48 in the conveying direction Z. The pre-separation pad 65 is made of, for example, silicone rubber. The pre-separation pad 65 has a function of reducing a number of the sheets G entering between the separation roller 47 and the separation pad 48.

A film 66 is provided between the upstream end portion of the pre-separation pad 65 in the conveying direction Z and the conveying guide member 39A. The film 66 is made of, for example, polyethylene terephthalate. The film 66 has a function of preventing the leading end of the sheet G from being caught in the gap between the upstream end portion of the pre-separation pad 65 in the conveying direction Z and the conveying guide member 39A.

[Control Part] A control part 2 includes an arithmetic part and a storage part (not shown). The arithmetic part is, for example, a CPU (Central Processing Unit). The storage part includes a storage medium such as ROM (Read Only Memory), RAM (Random Access Memory), and EEPROM (Electrically Erasable Programmable Read Only Memory). The arithmetic part reads and executes the control program stored in the storage part to perform various processes. The control part 2 may be implemented only by an integrated circuit without using software.

[Display Operation Part] A display operation part 19 is provided on the front side of the document reading apparatus 110. The display operation part 19 includes a display panel, a touch panel superposed on the display surface of the display panel, and a keypad. The control part 2 causes the display panel to display a screen showing an operation menu, status, or the like of the printing apparatus 1 and the document reading apparatus 110, and controls each part of the printing apparatus 1 and the document reading apparatus 110 according to the operation detected by the touch panel and the keypad.

[Operation] The basic operation of the image forming system 100 is as follows. When a user places the sheet G on the upper surface of the contact glass 31 and gives a reading instruction to the document reading apparatus 110, the second carriage 33 moves rightward at a speed V/2 in conjunction with the movement of the first carriage 32 rightward at a speed V. During this time, the light source of the first carriage 32 irradiates the sheet G with light, and the reflected light reflected by the sheet G is reflected by the reflecting mirror of the first carriage 32 and the reflecting mirrors of the second carriage 33, is guided to the lens 34A, is imaged by the imaging element 34, and is converted into an image signal. The image signal is output to the control part 2 of the printing apparatus 1 and converted into the image data.

On the other hand, when the user places the sheets G on the sheet feeding tray 36 and gives a reading instruction to the document reading apparatus 110, the feed roller 46 is driven to feed the sheet G one by one to the conveying path 39. The sheet G is conveyed along the conveying path 39 and discharged to the discharge tray 37 via the opening 35A. During this time, the light source of the first carriage 32 irradiates the sheet G with light through the opening 35A, and the reflected light reflected by the sheet G is reflected by the reflecting mirror of the first carriage 32 and the reflecting mirrors of the second carriage 33, is guided to the lens 34A, and is imaged by the imaging element 34 and then converted into an image signal. The image signal is output to the control part 2 of the printing apparatus 1 and converted into the image data.

In the printing apparatus 1, the sheet feed roller 5 feeds the sheet S from the sheet feeding cassette 4 to the conveying path 10, the registration roller 18 whose rotation is stopped corrects the posture of the sheet S, and the registration roller 18 feeds the sheet S to the image forming device 6 at a predetermined timing. In the image forming device 6, the charging device 12 charges the photosensitive drum 11 to a predetermined potential, the exposure device 13 writes an electrostatic latent image on the photosensitive drum 11, and the developing device 14 develops the electrostatic latent image using the toner supplied from the toner container 20 to form a toner image. Thereafter, the primary transfer roller 151 transfers the toner image to the intermediate transfer belt 15B, and the secondary transfer roller 152 transfers the toner image to the sheet S.

Subsequently, the fixing device 7 fixes the toner image to the sheet S by melting the toner image while holding and conveying the sheet S, and the discharge roller 8 discharges the sheet S to the discharge tray 9. In the case of double-sided printing, the sheet S on which the toner image is fixed on the first surface is fed to the conveying path 10 via the inversion conveying path 10R, and then the toner image is transferred to the second surface.

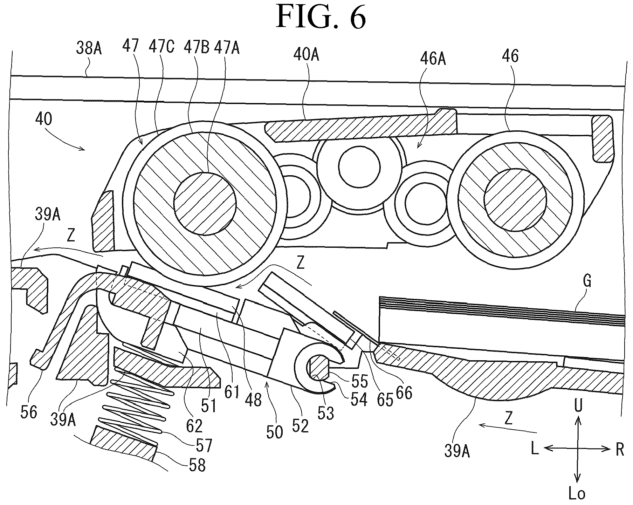

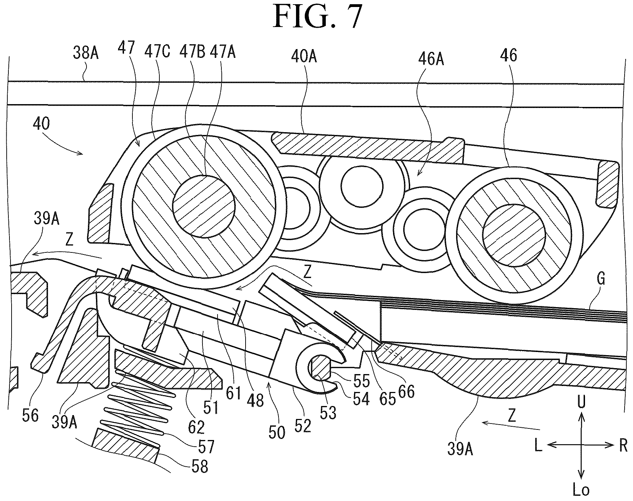

Next, the feeding operation of the sheet G by the feed part 40 will be described. When the sheets G (see FIG. 6) placed on the sheet feeding tray 36 are fed, the feed roller 46 and the separation roller 47 are driven in the clockwise direction in FIG. 6. In this case, since torque also acts on the holder 40A in the clockwise direction, the holder 40A is turned in the clockwise direction around the shaft 47A, and the feed roller 46 is pressed against the uppermost sheet G among the sheets G placed on the sheet feeding tray 36. However, when the sheets G are stuck to each other due to static electricity or the like, there is a possibility of doble feeding in which a plurality of the sheets G is fed while being overlapped (see FIG. 7).

In this embodiment, when the sheet G is double fed, the pre-separation pad 65 is first in contact with the leading end of the sheet G. Since the pre-separation pad 65 is inclined, the double-fed sheets G are bent upward to separate the leading ends of the sheets G, and the upper sheet G is preferentially fed. Next, the double fed sheets G enter between the separation roller 47 and the separation pad 48. Here, a friction coefficient between the separation roller 47 and the sheet G is set to µ1, a friction coefficient between the sheet G and the separation pad 48 is set to µ2, and a friction coefficient between the sheets G is set to µ3. When the condition µ3 < µ2 < µ1 is satisfied, only the uppermost sheet G is conveyed, and the other sheets G remain on the separation pad 48 by frictional resistance with the separation pad 48. Thereafter, the uppermost sheet G among the sheets G remaining on the separation pad 48 is conveyed, and this operation is repeated until there is no sheet G on the separation pad 48.

The document conveying apparatus 120 described above, which is the sheet conveying apparatus according to the present embodiment, includes the feed roller 46 which feeds the sheet G from the sheet feeding tray 36 in the predetermined conveying direction Z, and the separation pad 48 which is provided on the downstream side of the feed roller 46 in the conveying direction Z. The document conveying apparatus 120 further includes the separation pad holder 50 which holds the separation pad 48, and the conveying guide member 39A which guides the conveyance of the sheet G and supports the separation pad holder 50. Further, the document conveying apparatus 120 includes the separation roller 47 which holds the sheet G fed by the feed roller 46 between itself and the separation pad 48 and conveys the sheet G in the conveying direction Z, and the first vibration damping member 61 which is provided between the separation pad 48 and the separation pad holder 50. Further, the document conveying apparatus 120 includes the second vibration damping member 62 which is provided between the separation pad holder 50 and the conveying guide member 39A. According to this configuration, since the vibration of the separation pad 48, the separation pad holder 50, and the conveying guide member 39A is suppressed, the document conveying apparatus 120 can suppress the abnormal noise generated by rubbing the paper powder on the separation roller 47 and the separation pad 48.

According to the sheet conveying apparatus according to the present embodiment, the separation pad 48 has a hardness higher than the separation roller 47. According to this configuration, the vibration of the separation pad 48 is suppressed, so that the abnormal noise can be suppressed.

According to the sheet conveying apparatus according to the present embodiment, the separation roller 47 is knurled. While the knurling process improves the effect of preventing the double feeding, the vibration of the separation pad 48 tends to occur, however, according to the present embodiment, the prevention of the double feeding and the suppression of the abnormal noise can be achieved simultaneously.

Further, according to the sheet conveying apparatus according to the present embodiment, the separation pad holder 50 can be turned around the hinge shaft 55 provided on the conveying guide member 39A. The biasing member engagement portion 59 is provided on the lower surface of the separation pad holder 50 and is engaged with the biasing member 57 for biasing the separation pad holder 50 toward the separation roller 47. The first vibration damping member 61 is provided on the upper surface of the separation pad holder 50, and the separation pad holder 50 holds the separation pad 48 through the first vibration damping member 61. Therefore, the first vibration damping member 61 can suppress the turning of the separation pad holder 50 holding the separation pad 48 due to the vibration caused on the separation pad 48 by the separation roller 47. Since the turning of the separation pad holder 50 can be suppressed, the first vibration damping member 61 can suppress generation of the abnormal noise from the separation pad holder 50.

According to the sheet conveying apparatus according to the present embodiment, the second vibration damping member 62 is provided on the lower surface of the separation pad holder 50 and is in physical contact with the conveying guide member 39A supporting the separation pad holder 50. Therefore, even when the first vibration damping member 61 cannot completely suppress the turning of the separation pad holder 50, the second vibration damping member 62 can suppress the turning of the separation pad holder 50. Therefore, the second vibration damping member 62 can suppress the abnormal noise generated from the separation pad holder 50 more reliably than in the case where the sheet conveying apparatus includes only the first vibration damping member 61 or in the conventional case.

According to the sheet conveying apparatus according to the present embodiment, the conveying guide member 39A detachably supports the separation pad holder 50. When the separation pad holder 50 is detachable, there is a possibility that vibration may easily occur in the separation pad holder 50, but according to this embodiment, the vibration of the separation pad holder 50 can be suppressed by the first vibration damping member 61 and the second vibration damping member 62.

The above embodiments may be modified as follows.

In the above embodiment, the groove 48A is formed in a straight line along the conveying direction Z, but the groove 48A may be formed in a straight line inclined by a predetermined angle with respect to the conveying direction Z. Compared with the case where the groove 48A is formed along the conveying direction Z, the probability of falling the paper powder into the groove 48A can be improved. A shape of the groove 48A may not be straight, but may be curved or meandered, for example. Compared with the case where the groove 48A is straight, the probability of falling the paper powder into the groove 48A can be improved.

The configuration including the separation roller 47 and the separation pad 48 of the above embodiment may be applied to the sheet feeding cassette 4.

In the above embodiment, the document reading apparatus 110 is shown as a flatbed scanner, but the document reading apparatus 110 may be a contact image scanner.

In the above embodiment, the printing apparatus 1 is a color printer, but the printing apparatus 1 may be a monochrome printer or an inkjet printer.

While the present disclosure has been described for specific embodiments, the present disclosure is not limited to those embodiments. Without departing from the scope and spirit of the present disclosure, those skilled in the art may modify the embodiments described above.

## Claims

1. A sheet conveying apparatus comprising:
a feed roller (46) which feeds a sheet (G) from a sheet feeding tray (36) in a predetermined conveying direction (Z);
a separation pad (48) which is provided on a downstream side of the feed roller (46) in the conveying direction (Z);
a separation pad holder (50) which holds the separation pad (48);
a conveying guide member (39A) which guides a conveyance of the sheet (G) and supports the separation pad holder (50);
a separation roller (47) which holds the sheet (G) fed by the feed roller (46) between itself and the separation pad (48) and conveys the sheet (G) in the conveying direction (Z);
a first vibration damping member (61) which is provided between the separation pad (48) and the separation pad holder (50); and
a second vibration damping member (62) which is provided between the separation pad holder (50) and the conveying guide member (39A).

2. The sheet conveying apparatus according to claim 1, wherein
the separation pad (48) has a hardness higher than the separation roller (47).

3. The sheet conveying apparatus according to claim 1 or claim 2, wherein
the separation roller (47) is knurled.

4. The sheet conveying apparatus according to any one of claims 1 to 3, wherein
the conveying guide member (39A) detachably supports the separation pad holder (50).

5. The sheet conveying apparatus according to any one of claims 1 to 4, wherein
the separation pad holder (50) is turnable around a hinge shaft provided on the conveying guide member (39A),
a biasing member engagement portion (59) is provided on a first surface of the separation pad holder (59) and is engaged with a biasing member (57) for biasing the separation pad holder (50) to the separation roller (47),
the first vibration damping member (61) is provided on a second surface of the separation pad holder (50) opposed to the first surface, and
the separation pad holder (50) holds the separation pad (48) via the first vibration damping member (61).

6. The sheet conveying apparatus according to claim 5, wherein
the second vibration damping member (62) is provided on the first surface of the separation pad holder (50) and is in physical contact with the conveying guide member (39A) supporting the separation pad holder (50).
